# EUROPÄISCHE PATENTANMELDUNG

(11) **EP 1 118 503 A2**
(43) Veröffentlichungstag der Anmeldung: **25.07.2001**
(21) Anmeldenummer: 01100551.9
(22) Anmeldetag: 10.01.2001
(51) Int. Cl.: B60R 1/072

(54) **Aussenrückblickspiegel**

(30) Priorität: 22.01.2000 DE 10002700
(71) Anmelder: REITTER & SCHEFENACKER GmbH & Co. KG, D-73730 Esslingen (DE)
(72) Erfinder: Apfelbeck, Robert, 94447 Plattling (DE)
(74) Vertreter: Jackisch-Kohl, Anna-Katharina

(57) **Zusammenfassung**

Der Außenrückblickspiegel ist insbesondere für Kraftfahrzeuge vorgesehen und weist eine für einen Spiegelglasträger (1) vorgesehene Verstellvorrichtung auf. Sie ist in einem Gehäuse (7) untergebracht, das mit einem als Federelement (3 bis 6) ausgebildeten Halteteil am Spiegelglasträger (1) gesichert ist. Um den Außenrückblickspiegel so auszubilden, daß das Gehäuse (7) ohne zusätzlich zu montierende Halteteile mit dem Spiegelglasträger (1) verbunden werden kann, ist das Federelement (3 bis 6) Teil des Spiegelglasträger (1) und/oder des Gehäuses (7). Das Federelement (3 bis 6) muß daher nicht am Gehäuse (7) bzw. am Spiegelglasträger (1) befestigt werden. Dadurch entfallen aufwendige Montagearbeiten. Der Außenrückblickspiegel eignet sich für Fahrzeuge, insbesondere Kraftfahrzeuge.

## Beschreibung

Die Erfindung betrifft einen Außenrückblickspiegel nach dem Oberbegriff des Anspruches 1.

Es sind Außenrückblickspiegel bekannt, bei denen das Gehäuse und der Spiegelglasträger über eine Feder oder einen Bajonettverschluß miteinander verbunden sind. Durch die Feder bzw. den Bajonettverschluß hat der Außenrückblickspiegel einen aufwendigen Aufbau. Auch sind die Befestigung und Montage dieser Teile aufwendig.

Der Erfindung liegt die Aufgabe zugrunde, einen Außenrückblickspiegel dieser Art so auszubilden, daß das Gehäuse ohne zusätzlich zu montierende Halteteile mit dem Spiegelglasträger verbunden werden kann.

Diese Aufgabe wird bei einem Außenrückblickspiegel der gattungsbildenden Art erfindungsgemäß mit den kennzeichnenden Merkmalen des Anspruches 1 gelöst.

Infolge der erfindungsgemäßen Ausbildung muß das Federelement nicht am Gehäuse bzw. am Spiegelglasträger befestigt werden. Dadurch entfallen aufwendige Montagearbeiten, wodurch der Außenrückblickspiegel einfach und schnell sowie kostengünstig montiert werden kann.

Weitere Merkmale der Erfindung ergeben sich aus den weiteren Ansprüchen, der Beschreibung und den Zeichnungen.

Die Erfindung wird nachstehend anhand eines in den Zeichnungen dargestellten Ausführungsbeispieles näher beschrieben. Es zeigt:
- Fig. 1: eine Spiegelglasträgerplatte eines erfindungsgemäßen Außenrückblickspiegels in Draufsicht,
- Fig. 2: die Spiegelglasträgerplatte nach Fig. 1 mit einem an ihr verriegeltem Gehäuse eines erfindungsgemäßen Außenrückblickspiegels in Draufsicht,
- Fig. 3: eine Darstellung entsprechend Fig. 2, jedoch mit dem Gehäuse in einer entriegelten Lage,
- Fig. 4: eine Darstellung entsprechend Fig. 2, wobei das Gehäuse teilweise von der Spiegelglasträgerplatte abgenommen ist.

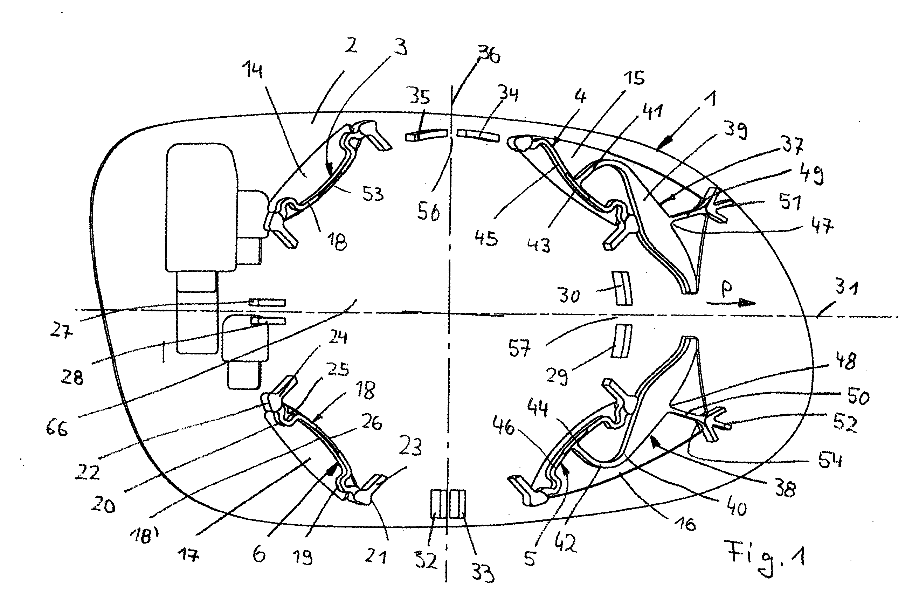

Der Außenrückblickspiegel hat einen Spiegelfuß, mit dem er am Kraftfahrzeug befestigt wird. Am Spiegelfuß ist ein Spiegelkopf gelagert, der ein Spiegelgehäuse aufweist, in dem eine Spiegelglasträgerplatte 1 (Fig. 1 bis 4) verstellbar untergebracht ist. Sie trägt an der Vorderseite ein (nicht dargestelltes) Spiegelglas. An der Rückseite 2 der Spiegelglasträgerplatte 1 sind mehrere Federelemente 3 bis 6 vorgesehen, mit denen ein Gehäuse 7 eines Verstellantriebes für die Spiegelglasträgerplatte 1 rastend gehalten wird.

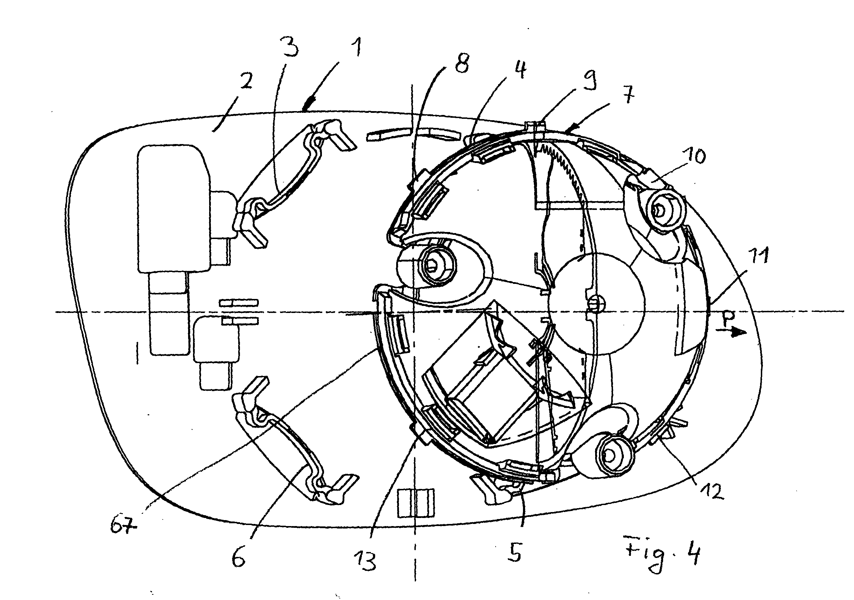

Das etwa halbkugelförmig ausgebildete Gehäuse 7 hat eine ebene Unterseite 67 (Fig. 4), mit der es in Einbaulage auf der Rückseite 2 der Spiegelglasträgerplatte 1 aufliegt. Vom umlaufenden Rand 7' des Gehäuses 7 stehen Rastgegenglieder 8, 10, 12, 13 radial ab, die in Raststellung des Gehäuses 7 von den Federelementen 3 bis 6 übergriffen werden. Die Rastgegenglieder 8, 10, 12,13 sind als rechteckige, sich in Umfangsrichtung erstreckende schmale Stege ausgebildet, deren Unterseite 67 vorzugsweise in einer Ebene mit der Unterseite des Gehäuses 7 liegt.

Die Federelemente 3 bis 6 sind einstückig mit der Spiegelglasträgerplatte 1 ausgebildet. Die Spiegelglasträgerplatte 1 und die Federelemente 3 bis 6 werden in einer Spritzgußform hergestellt. Die Federelemente sind vorzugsweise gleich ausgebildet und liegen etwa auf einem gedachten Kreis mit etwa gleichem umfangsseitigen Abstand voneinander (Fig. 1). Der Durchmesser dieses Kreises ist etwas kleiner als die Breite der Spiegelglasträgerplatte 1 im Bereich ihrer halben Länge. Im Bereich jedes Federelementes 3 bis 6 ist die Spiegelglasträgerplatte 1 mit einem Durchbruch 14 bis 17 versehen.

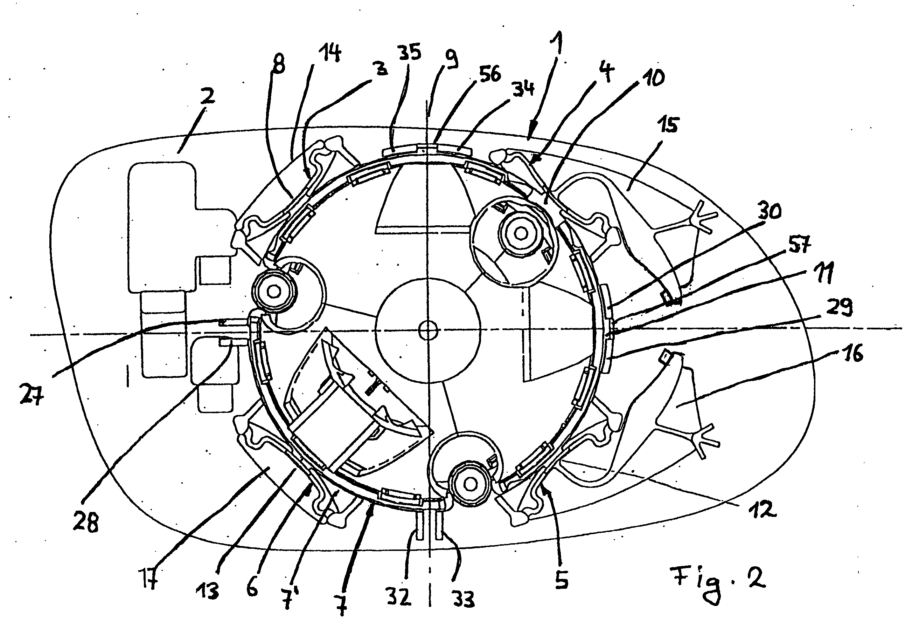

Die Ausbildung der Federelemente 3 bis 6 wird anhand des Federelementes 6 (Fig. 1) näher erläutert. Das Federelement 6 liegt oberhalb des Durchbruches 17 und ist als hochkant angeordneter Federsteg ausgebildet. Es hat einen mittleren, etwa U-förmigen und sich etwa tangential zum gedachten Kreis erstreckenden Halteteil 18, dessen Schenkel 19, 20 ebenfalls etwa U-förmig in entgegengesetzter Richtung nach außen gebogen sind. Sie schließen an verdickte Enden 21, 22 von Haltestegen 23, 24 an, die seitlich neben dem Durchbruch 17 auf der Platte 1 vorgesehen sind. Der federnde Quersteg 18' des Halteteiles 18 ist mit großem Radius nach innen in Richtung auf die Achse des gedachten Kreises gekrümmt. Der Quersteg 18' weist annähernd in halber Breite an seinem oberen Rand eine Abschrägung 26 auf. Zwischen den benachbarten Federelementen 3 und 6 sind zwei sich in Längsrichtung der Platte erstreckende bzw. radial zum gedachten Kreis liegende kurze Rippen bzw. Stege 27 und 28 vorgesehen, während auf der gegenüberliegenden Seite zwischen den Federelementen 4 und 5 zwei Rippen 29 und 30 liegen, die leicht gekrümmt und in Umfangsrichtung des gedachten Kreises verlaufen. Die Rippen 27, 28 bzw. 29, 30 liegen symmetrisch und mit gleichem Abstand von der Längsmittelebene 31 der Platte 1. Zwischen den Federelementen 6 und 5 und den Federelementen 4 und 3 sind weitere Rippen 32 bis 35 vorgesehen. Die Rippen 32, 33 liegen symmerisch und unmittelbar neben der Quermittelebene 36 der Spiegelglasträgerplatte 1 und erstrecken sich parallel zueinander. Die gegenüberliegenden Rippenpaare 34, 35 zwischen den Federelementen 3, 4 verlaufen wie das Rippenpaar 29, 30 in Umfangsrichtung des gedachten Kreises und liegen mit gleichem Abstand beiderseits der Quermittelebene 36. In den Zwischenraum 56, 57 zwischen den Rippenpaaren 34, 35 und 29, 30 ragen in Raststellung des Gehäuses 7 radial von ihm abstehende Vorsprünge 9 und 11. An den Stirnseiten der anderen beiden Rippenpaare 27, 28 und 32, 33 liegt das Gehäuse 7 mit seinem Rand 7' an. Die radial zum gedachten Kreis liegenden Rippenpaare 27, 28 und 32, 33 haben einen Winkelabstand von 90° voneinander. Auch die Rippenpaare 29, 30 und 34, 35 liegen in einem Winkelabstand von 90° zueinander, die außerdem in einem Winkelabstand von 90° zu den Rippenpaaren 27, 28 bzw. 32, 33 liegen. Die Rippenpaare 27, 28; 32, 33; 29, 30 und 34, 35 dienen zur Ausrichtung und Lagesicherung des Gehäuses 7, das, wie Fig. 2 zeigt, mit seinem kreisförmigen Rand 7' an den Stirnseiten der radial liegenden Rippenpaare 27, 28 und 32, 33 sowie an den Längsseiten der in Umfangsrichtung sich erstreckenden Rippenpaare 29, 30 und 34, 35 anliegt. Die Rippenpaare liegen jeweils mittig zwischen den Federelementen 3 bis 6, die voneinander jeweils einen Winkelabstand von 90° haben.

An den benachbarten Federelementen 4 und 5 greift jeweils ein zweiarmiger Schwenkhebel 37, 38 an (Fig. 1). Diese sind vorzugsweise einstückig mit dem Federelement 4, 5 bzw. der Spiegelglasträgerplatte 1 ausgebildet. Die Schwenkhebel 37, 38 haben etwa trapezförmigen Umriß. Das Ende des einen Hebelarmes 39, 40 geht gekrümmt in einen Verbindungssteg 41, 42 über, der mit seinem freien Ende etwa mittig an den Halteteil 45, 46 des Federelementes 4, 5 anschließt. Etwa in halber Länge des Schwenkhebels 37, 38 schließt an die vom Federelement 4, 5 abgewandte Seite 47, 48 ein Verbindungssteg 49, 50 an, der an seinem freien Ende als dreiarmige Kralle 51, 52 ausgebildet ist. Mit ihr ist der Schwenkhebel 37, 38 an der Spiegelglasträgerplatte 1 in einem Eckbereich 53, 54 des Durchbruches 15, 16 gehalten. Die drei Stege jeder Kralle 51, 52 stehen senkrecht auf der Spiegelglasträgerplatte 1 und sind einstückig mit ihr ausgebildet. Die Schwenkhebel 37, 38 mit ihren Verbindungsstegen 41, 49 und 42, 50 liegen im Bereich oberhalb der Spiegelglasträgerplatte 1, vorzugsweise in Höhe der Federelemente 4, 5. Die Durchbrüche 15, 16, in deren Bereich die Federelemente 4, 5 und die Schwenkhebel 37, 38 liegen, sind aus herstellungstechnischen Gründen größer als die Durchbrüche 14, 17.

In der in Fig. 2 dargestellten Einbaulage des Gehäuses 2 an der Spiegelglasträgerplatte 1 werden die Rastgegenglieder 8, 10, 12, 13 von den Halteteilen 18, 45, 46 der Federelemente 3 bis 6 übergriffen. Die Vorsprünge 9, 11 ragen in die Zwischenräume 56, 57 der Rippenpaare 29, 30 und 34, 35. Die Halteteile 18, 45, 46 der Federelemente 3 bis 6 sind leicht in Richtung auf das Gehäuse 7 gekrümmt, so daß das Gehäuse 6 zuverlässig durch die Federelemente 3 bis 6 gesichert ist. Hinzu kommt, daß die Halteteile 45, 46 der Federelemente 4, 5 durch die Schwenkhebel 38, 39 vorteilhaft in Richtung auf das Gehäuse 7 vorgespannt sind.

Zur Montage wird das Gehäuse 7 so von oben in die von den Federelementen 3 bis 6 begrenzte Aufnahmeöffnung 66 eingesetzt, daß ihre Rastgegenglieder 8, 10, 12, 13 unter die Halteteile 18, 45, 46 der Federelemente 3 bis 6 einrasten. Hierbei werden die Halteteile 18, 45, 46 elastisch verformt. Um beim Aufsetzen des Gehäuses 7 die elastische Verformung der Halteteile 18, 45, 46 zu erleichtern, sind sie auf ihrer dem Gehäuse 7 zugewandten Seite am oberen Rand mit jeweils einer Abschrägung 53, 43, 44, 26 versehen. Auf diese Abschrägungen treffen die Rastgegenglieder 8, 10, 12, 13, die die Halteteile 18, 45, 46 der Federelemente 3 bis 6 elastisch nach außen biegen, bis die Halteteile die Rastgegenglieder durch Zurückfedern übergreifen. Durch die Vorsprünge 9, 11, die in die Zwischenräume 56, 57 der Rippenpaare 34, 35; 29, 30 eingreifen, wird das Gehäuse 7 gegen Verdrehen einwandfrei gesichert.

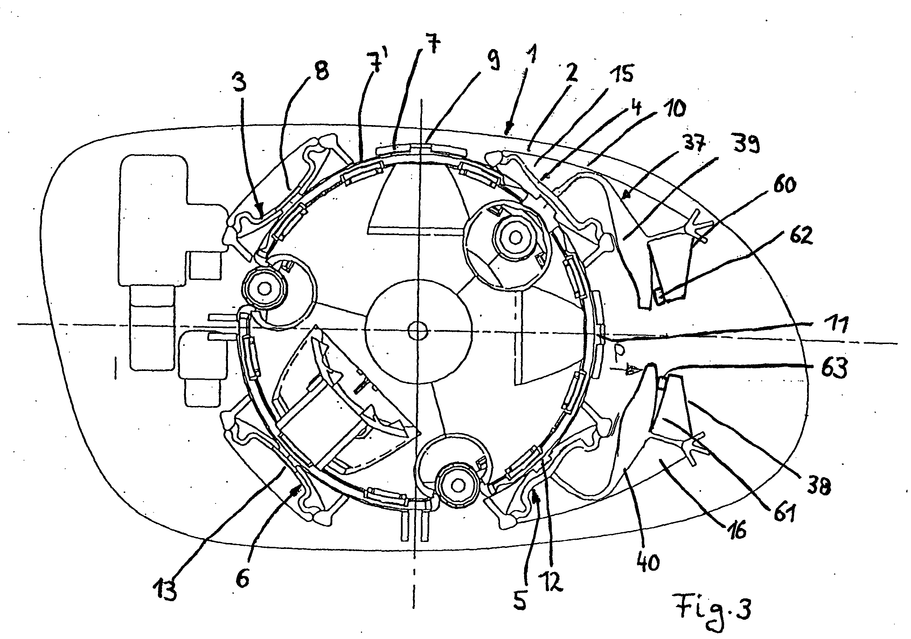

Zum Lösen des Gehäuses 7 von der Spiegelglasträgerplatte 1 werden die Schwenkhebel 37, 38 entgegengesetzt zueinander geschwenkt (Fig. 3). Hierzu werden die einander benachbarten, von den zugehörigen Federelementen 4, 5 abgewandten Hebelarme 60, 61 in Richtung auf das Gehäuse 7 geschwenkt. Da die Schwenkhebel 37, 38 zweiarmig ausgebildet sind, werden die Halteteile 45, 46 der Federelemente 4, 5 über die anderen Hebelarme 39, 40 und die Verbindungsstege 41, 42 elastisch zurückgebogen, so daß die Rastgegenglieder 10, 12 des Gehäuses 7 freikommen (Fig. 3). Da die Verbindungsstege 41, 42 dünnwandig ausgebildet sind, lassen sie sich beim Verschwenken der Hebel 37, 38 leicht elastisch biegen. Das Gehäuse 7 kann, wie in Fig. 4 dargestellt, anschließend leicht angehoben werden, bis die Vorsprünge 9, 11 von den Rippenpaaren 34, 35; 29, 30 freikommen. Das Gehäuse 7 wird dann in Pfeilrichtung P nach rechts bewegt. Dadurch kommen auch die anderen Rastgegenglieder 8 und 13 außer Eingriff mit den Federelementen 3 und 6, so daß das Gehäuse 7 problemlos von der Spiegelglasträgerplatte 1 abgehoben werden kann.

Da die Federelemente 3 bis 6 und die Schwenkhebel 37, 38 über die verdickten Enden 21, 22 und die Krallen 51, 52 an die Spiegelglasträgerplatte 1 angebunden sind, können die Federelemente und die Schwenkhebel zuverlässig geschwenkt werden. Da sie zusammen mit den Verbindungsstegen 41, 49; 42, 50 hochkant zur Spiegelglasträgerplatte 1 angeordnet sind, sind sie trotz ihrer Elastizität ausreichend stabil.

Um die Schwenkhebel 37, 38 in der verschwenkten Freigabestellung zu halten, sind von der Glasträgerplatte 1 abstehende Nasen 62, 63 vorgesehen, vor welchen die Schwenkhebel 37, 38 bzw. deren Hebelarme 60, 61 in der Lösestellung zu liegen kommen (Fig. 3). Soll die Spiegelglasträgerplatte 1 wieder arretiert werden, werden die Hebelarme 60, 61 über die Nasen 62, 63 angehoben und auf der anderen Seite an den Nasen zur Anlage gebracht.

Mit den beschriebenen Rastanordnungen läßt sich das Gehäuse 7 auf einfache Weise, ohne daß gesonderte Befestigungselemente gelöst werden müssen, von der Spiegelglasträgerplatte einfach lösen. Da die Federelemente 4, 5 mit den Schwenkhebeln 37, 38 einstückig mit der Spiegelglasträgerplatte 1 ausgebildet sind, ist eine konstruktiv einfache Ausbildung und eine kostengünstige Herstellung gewährleistet. Darüber hinaus müssen Halteteile für das Gehäuse 7 nicht gesondert montiert und an der Spiegelglasträgerplatte 1 befestigt werden. Darüber hinaus läßt sich die Spiegelglasträgerplatte 1 sogleich nach ihrer Herstellung im Spritzgußverfahren ohne weitere Montageschritte verbauen.

## Patentansprüche

1. Außenrückblickspiegel für Fahrzeuge, insbesondere Kraftfahrzeuge, mit einer für einen Spiegelglasträger vorgesehenen Verstellvorrichtung, die in einem Gehäuse untergebracht ist, das mit mindestens einem als Federelement ausgebildeten Halteglied am Spiegelglasträger gesichert ist,
dadurch gekennzeichnet, daß das Federelement (3 bis 6) Teil des Spiegelglasträgers (1) und/oder des Gehäuses (7) ist.

2. Spiegel nach Anspruch 1,
dadurch gekennzeichnet, daß das Federelement (3 bis 6) einstückig mit dem Spiegelglasträger (1) ausgebildet ist.

3. Spiegel nach Anspruch 1 oder 2,
dadurch gekennzeichnet, daß das Federelement (3 bis 6) mit einem Gegenglied (8, 10, 12, 13) zusammenwirkt, das vorzugsweise radial über einen Rand (7') des Gehäuses ragt.

4. Spiegel nach Anspruch 2 oder 3,
dadurch gekennzeichnet, daß das Gehäuse (7) mindestens zwei, vorzugsweise mehrere in Umfangsrichtung mit Abstand hintereinander liegende Gegenglieder (8, 10, 12, 13) aufweist, die vorteilhaft als schmale, sich in Umfangsrichtung des Gehäuses (7) erstreckende Stege ausgebildet sind.

5. Spiegel nach einem der Ansprüche 1 bis 4,
dadurch gekennzeichnet, daß die Federelemente (3 bis 6) einen etwa U-förmig ausgebildeten Halteteil (18) aufweisen, dessen Quersteg (18', 45, 46) vorteilhaft in Richtung auf das Gehäuse (7) gekrümmt verläuft.

6. Spiegel nach Anspruch 5,
dadurch gekennzeichnet, daß die Schenkel (19, 20) des Halteteiles (18) des Federelementes (3 bis 6) über U-förmig nach außen gekrümmte Schenkelenden (19, 20) an den Spiegelglasträger (1) anschließen, die vorteilhaft in Haltestege (23, 24), vorzugsweise in verdickte Enden (21, 22) der Haltestege, übergehen.

7. Spiegel nach Anspruch 5 oder 6,
dadurch gekennzeichnet, daß die Querstege (18', 45, 46) der Federelemente (3 bis 6) etwa in halber Länge eine Abschrägung (26, 43, 44, 53) aufweisen.

8. Spiegel nach einem der Ansprüche 1 bis 7,
dadurch gekennzeichnet, daß mehrere, vorzugsweise vier längs eines gedachten Kreises angeordnete Federelemente (3 bis 6) vorgesehen sind, und daß vorteilhaft an mindestens einem, vorzugsweise zwei einander benachbarten Federelementen (4, 5) ein Lösehebel (37, 38) angreift.

9. Spiegel nach Anspruch 8,
dadurch gekennzeichnet, daß der Lösehebel (37, 38) als zweiarmiger Hebel ausgebildet ist, dessen einer Hebelarm (39, 40) vorteilhaft ein stegartig verlängertes Ende (41, 42) aufweist, mit dem er am Federelement (4, 5) angreift.

10. Spiegel nach Anspruch 8 oder 9,
dadurch gekennzeichnet, daß das Federelement (4, 5) und der Lösehebel (37, 38) einstückig miteinander ausgebildet sind.

11. Spiegel nach Anspruch 9 oder 10,
dadurch gekennzeichnet, daß der Lösehebel (37, 38) über einen Haltesteg (49, 50) mit dem Spiegelglasträger (1) verbunden ist, wobei vorteilhaft der Haltesteg (49, 50) etwa in halber Länge an der vom Federelement (4, 5) abgewandten Seite des Lösehebels (37, 38) anschließt.

12. Spiegel nach Anspruch 11,
dadurch gekennzeichnet, daß der Haltesteg (49, 50) mit einem vorzugsweise gabelartig ausgebildeten Ende (51, 52) an den Spiegelglasträger (1) anschließt.

13. Spiegel nach einem der Ansprüche 8 bis 12,
dadurch gekennzeichnet, daß die Federelemente (3 bis 6) und/oder die Lösehebel (37, 38) oberhalb eines Durchbruches (14 bis 17) des Spiegelglasträgers (1) liegen.

14. Spiegel nach einem der Ansprüche 1 bis 13,
dadurch gekennzeichnet, daß zwischen den einander benachbarten Federelementen (3 bis 6) auf dem Spiegelglasträger (1) vorteilhaft jeweils paarweise vorgesehene Sicherungsstege (27, 28; 29, 30; 32, 33; 34, 35) vorgesehen sind.

15. Spiegel nach Anspruch 14,
dadurch gekennzeichnet, daß mindestens ein, vorzugsweise zwei Paare der Sicherungsstege (29, 30; 34, 35) sich in Umfangsrichtung der Federelemente (3 bis 6) erstrecken, und daß vorteilhaft die sich in Umfangsrichtung erstreckenden Sicherungsstege (29, 30; 34, 35) einen solchen Abstand voneinander haben, daß in den Zwischenraum (56, 57) eines der Gegenglieder (9, 11) des Gehäuses (7) ragt.

16. Spiegel nach Anspruch 14 oder 15,
dadurch gekennzeichnet, daß mindestens ein, vorzugsweise zwei nebeneinander liegende weitere Paare von Sicherungsstegen (27, 28; 32, 33) mit vorzugsweise kleinerem Abstand nebeneinander liegen als die anderen Sicherungsstegpaare (29, 30; 34, 35).

17. Spiegel nach Anspruch 16,
dadurch gekennzeichnet, daß an den weiteren Sicherungsstegpaaren (27, 28; 32, 33) das Gehäuse (7) anliegt.

18. Spiegel nach einem der Ansprüche 8 bis 17,
dadurch gekennzeichnet, daß die Lösehebel (37, 38) an ihren einander zugewandten Hebelarmen (60, 61) in verschwenkter Lage vorzugsweise durch zwei Nasen (62, 63) verriegelbar sind, die vorteilhaft vom Spiegelglasträger (1) abstehen.

19. Spiegel nach einem der Ansprüche 8 bis 18,
dadurch gekennzeichnet, daß die Federelemente (3 bis 6) und die Lösehebel (41, 42; 49, 50) hochkant zum Spiegelglasträger (1) liegen.
